# DEMANDE DE BREVET EUROPEEN

(11) **EP 2 687 429 A2**
(43) Date de publication de la demande: **22.01.2014**
(21) Numéro de dépôt: 13175194.3
(22) Date de dépôt: 04.07.2013
(51) Int. Cl.: B62D 53/00, B60D 1/14, B60D 1/48, B60D 1/00

(54) **Base roulante à plateau tournant**

(30) Priorité: 16.07.2012 FR 1256853
(71) Demandeur: COUTIER INDUSTRIE, 57970 Basse Ham (FR)
(72) Inventeur: Coutier, Charles, 57570 Cattenom (FR)
(74) Mandataire: Lavialle, Bruno François Stéphane

(57) **Abrégé**

L'invention concerne une base roulante comportant un châssis (1) rectangulaire, pourvu en partie inférieure, d'organes (2) de roulement et, à chaque extrémité, de moyens d'attelage (5,6) correspondants, l'un d'eux (6) étant porté par un timon (7) relevable et un plateau supérieur (3), de contour sensiblement identique à celui du châssis (1), monté à pivotement autour d'un axe vertical (4) du châssis, et en ce que le timon relevable (7) possède une platine (9) de sa fixation au châssis (1) et en ce que le châssis possède d'une entretoise (10) interposée de manière démontable entre le châssis et la platine, la longueur de l'entretoise (10) étant au moins égale à la demi-différence entre la diagonale (d) et le grand côté (l) du châssis.

## Description

La présente invention concerne une base roulante destinée à la manutention des pièces par exemple dans un atelier d'un poste à un autre (montage, chargement déchargement, approvisionnement...).

### ARRIERE PLAN DE L'INVENTION

La plupart des bases roulantes existantes comportent un châssis avec des roues en partie inférieure, une main courante ou barre de manoeuvre à l'une de leurs extrémités et des moyens d'attelage à chaque extrémité (en général un timon relevable qui possède en extrémité un anneau ou un boîtier pour coopérer avec un moyen d'attelage correspondant qui est un doigt vertical, un crochet ou une sphère).

Certaines de ces bases possèdent un plateau au-dessus du châssis qui peut tourner dans un plan horizontal pour augmenter le confort de l'utilisateur lors du chargement ou du déchargement manuel de la base. Ces bases sont un peu spéciales au sens où, pour une capacité donnée de transport qui est fonction de la surface de portage (rectangulaire) qu'offre la base, le châssis présente un cadre plus long que le plateau et de largeur sensiblement égale à celle du plateau. On comprend en effet que la rotation du plateau tournant balaye à sa base, au-dessus du châssis, une surface circulaire dont le diamètre est égal à la dimension de sa diagonale.

On assiste à une standardisation de la capacité de manutention des bases roulantes et il se pose un besoin de rationalisation de la fabrication de celles-ci. L'invention répond à ce besoin par la structure du châssis des bases roulantes.

### OBJET DE L'INVENTION

C'est ainsi que l'invention a pour objet une base roulante comportant un châssis rectangulaire, pourvu en partie inférieure, d'organes de roulement et, à chaque extrémité, de moyens d'attelage correspondants, l'un d'eux étant porté par un timon relevable et un plateau supérieur, de contour sensiblement identique à celui du châssis, monté à pivotement autour d'un axe central vertical du châssis, **caractérisée en ce que** le timon relevable possède une platine de sa fixation au châssis et en ce que le châssis possède des moyens de fixation de cette platine et/ou d'une entretoise interposée de manière démontable entre le châssis et la platine, la longueur de l'entretoise étant au moins égale à la demi-différence entre la diagonale et le grand côté du châssis(1).

Cette entretoise permet de déporter l'attache du timon au châssis de manière que dans son état relevé, il ne vienne pas interférer avec le coin du plateau pivotant lorsque ce dernier est manoeuvré en rotation par l'opérateur. On comprend qu'entre le châssis d'une base ordinaire, de capacité donnée et le châssis d'une base à plateau tournant ou pivotant, il n'y a pas de différence de fabrication excepté la présence de l'entretoise. On peut donc rationnaliser la fabrication de ces châssis et décliner, à partir de celui-ci, soit la production soit de bases ordinaires, soit la production de bases à plateau pivotant.

Quand en outre la base roulante est équipée d'une poignée de manoeuvre (main courante), celle-ci est attachée au châssis également par l'intermédiaire de l'entretoise.

D'autres caractéristiques et avantages de l'invention ressortiront de la description donnée ci-après d'un exemple de réalisation de l'invention.

### BREVE DESCRIPTION DES DESSINS

Il sera fait référence aux dessins annexés dans lesquels :

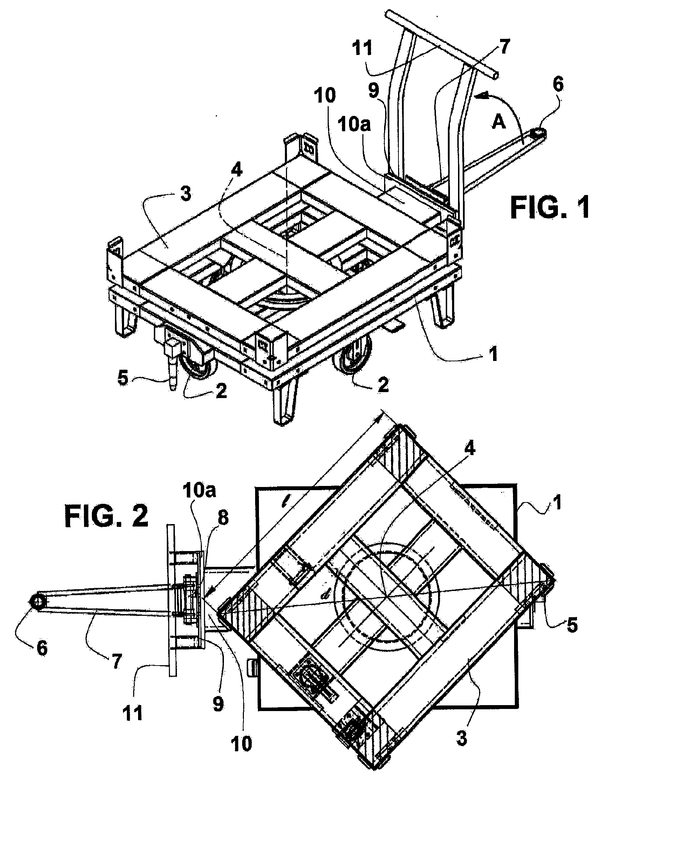

- la figure 1 est une vue en perspective d'une base à plateau tournant conforme à l'invention,
- la figure 2 est une vue de cette même base, dont le plateau est pivoté.

### DESCRIPTION DETAILLEE DE L'INVENTION

Aux figures, la base roulante comporte un châssis 1 avec des roues inférieures 2, ici au nombre de quatre disposées en losange sous la base et montées folles autour d'un axe vertical pour les roues avant et arrière et fixes pour les roues latérales.

Ce châssis porte un plateau supérieur 3 monté pivotant autour d'un axe vertical central 4 du châssis.

Ce châssis est équipé à ses extrémités longitudinales (le contour du châssis est rectangulaire) de moyens pour son attelage à une base précédente et/ou suivante ou à un véhicule tracteur. Dans le cas des figures, ceux-ci comporte un doigt 5 à une extrémité et, à son autre extrémité, un anneau 6 dans lequel le doigt peut être logé, cet anneau étant porté par un timon 7, relevable (A) autour d'un axe horizontal 8. Cet axe 8 est porté par une platine 9 de fixation du timon au châssis.

Dans d'autres cas, le timon peut être équipé d'un boîtier sphérique qui vient coiffer un crochet à boule.

Selon l'invention, le timon est relié au châssis par une entretoise 10 dont la longueur dans le sens longitudinal de la base est au moins égale à la demi-différence entre la dimension 1 longitudinale du plateau 3 et sa diagonale d. Cette entretoise 10 comporte à l'une de ses extrémités une platine 10a de réception du timon 7 tandis que son autre extrémité est pourvue de moyens pour sa fixation démontable au châssis 1 de la base roulante.

Ce châssis est donc de dimensions standard et peut constituer l'élément de base pour une fabrication rationnelle de bases roulantes à plateau pivotant ou non.

On notera également aux figures la présence d'une poignée ou main courante 11 de manoeuvre de la base, portée par la platine 9 de fixation du timon. Cette poignée, quand elle existe, est ainsi éloignée du volume balayé par le plateau tournant lors de sa rotation.

Il faut également noter qu'une telle entretoise peut être mise en place entre le châssis et l'autre moyen d'attelage (doigt ou crochet à boule par exemple) notamment lorsque le doigt ou le crochet est tourné vers le haut et que l'attelage se réalise par abaissement du timon. En effet, le sommet du doigt ou du crochet à boule peut dépasser en altitude la surface supérieure du châssis.

Dans une autre variante de l'invention, dans laquelle le châssis est rehaussé par rapport aux roues, l'entretoise selon l'invention permet d'offrir une fixation des organes d'attelage qui conserve la garde au sol de ceux-ci malgré cette rehausse. On conserve donc l'homogénéité de l'attelage dans la constitution de trains de bases.

## Revendications

1. Base roulante comportant un châssis (1) rectangulaire, pourvu en partie inférieure, d'organes (2) de roulement et, à chaque extrémité, de moyens d'attelage (5,6) correspondants, l'un d'eux (6) étant porté par un timon (7) relevable et un plateau supérieur (3), de contour sensiblement identique à celui du châssis (1), monté à pivotement autour d'un axe central vertical (4) du châssis, **caractérisée en ce que** le timon relevable (7) possède une platine (9) de sa fixation au châssis (1) et **en ce que** le châssis possède des moyens de fixation de cette platine et/ou d'une entretoise (10) interposée de manière démontable entre le châssis et la platine, la longueur de l'entretoise (10) étant au moins égale à la demi-différence entre la diagonale (d) et le grand côté (1) du châssis(1).

2. Base roulante selon la revendication 1, **caractérisée en ce que** l'entretoise comporte à son extrémité libre une plaque (10a) de fixation de la platine.

3. Base roulante selon la revendication 1, **caractérisée en ce qu'**elle est équipée d'une poignée de manoeuvre (11) (main courante), attachée au châssis (1) également par l'intermédiaire de l'entretoise.
